Europäisches Patentamt

European Patent Office

Office européen des brevets

(19)

(11) **EP 1 139 291 A2**

(12) **EUROPEAN PATENT APPLICATION**

(43) Date of publication:
**04.10.2001 Bulletin 2001/40**

(51) Int Cl.$^7$: **G06T 9/00**, G06T 15/70

(21) Application number: **01303028.3**

(22) Date of filing: **30.03.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Waterfall, Andrew E.**<br>  **Coventry CV4 7HX (GB)**<br>• **Atherton, Timothy James**<br>  **Kenilworth, Warwickshire CV8 1AP (GB)**<br>• **Anagnostou, Kostantinos**<br>  **Coventry CV1 2LE (GB)** |
| (30) Priority: **31.03.2000 US 540262**<br> **26.03.2001 US** | |
| | (74) Representative: **Bannerman, David Gardner et al**<br>**Withers & Rogers,**<br>**Goldings House,**<br>**2 Hays Lane**<br>**London SE1 2HW (GB)** |
| (71) Applicant: **Image Processing & Vision Company Limited**<br>**Coventry CV4 7HS (GB)** | |

(54) **Method for visualization of time sequences of 3D optical flurescence microscopy images**

(57)    A method for compressing 4D image data to accelerate the visualization of the data comprising the sequential steps of processing the 4D image data for storage in an electronic form, and converting the pre-processed 4D image data into a plurality of 2D images, each of the 2D images comprising a 2D display image.

EP 1 139 291 A2

**Description**

BACKGROUND OF THE INVENTION

(1) Field of the Invention

This invention relates to a method for the visualisation of 4D data, and more particularly to the rendering of sequences of 3D data sets comprised of optical fluorescence microscopy images.

(2) Description of the Related Art

There exist, generally, many instances of large, four-dimensional data sets. In particular, many four dimensional, or 4D, data sets are comprised of three orthogonal spatial dimensions as well as the additional dimension of time. Thus, these 4D data sets consist of a succession of snapshots of a three dimensional volume through time. The volume elements, or voxels, which comprise each 4D data set correspond to the three dimensional space of human experience. Similar to two dimensional picture elements, or pixels, which comprise 2D images, voxels form the three-dimensional building blocks of data which combine to form three-dimensional data sets. As such, there is utility to be derived from the ability to construct visualisations of such data so as to enable analysis through human cognition. In particular, the visualisation of 4D images derived from processes such as optical fluorescence microscopy possesses the potential to aid numerous scientific endeavors.

Traditional attempts to solve the problem of efficient 4D data visualisation fall generally into two categories. The first methodology involves obtaining a 2D image from each 3D image stack by extracting data from a planar "slice" through the 3D data. As used herein, "image stack" refers a two-dimensional, planar array of voxels. When a plurality of such image stacks are situated one atop another, a three-dimensional volume is defined. Two-dimensional images obtained in this way from each 3D image stack can then be combined to form a time sequence. A second methodology involves the creation of a 2D image obtained from each 3D image stack by projecting data onto a plane perpendicular to a "view direction". The projection can vary in complexity, from taking the brightest point along a "ray" from a point on the view plane, to including effects of opacity to obscure occluded objects. Unfortunately, both methodologies derive a 2D image from each 3D data stack in isolation from the other 3D images in the 4D data. As such, they fail to exploit the substantial coherence in time between subsequent 3D images. Numerous examples of these methodologies are detailed in the following.

In A Fast Volume Rendering Method for Time-Varying 3-D Scalar Field Visualisation Using Orthonormal Wavelets, Dobashi et al. propose a rendering method for time-varying data whereby orthonormal wavelets are used to encode time coherency. This is accomplished by expanding the time varying scalar field into a series of wavelets, and by eliminating the frequency components that correspond to small changes over time. This leads to an approximation of the volume data that may not be acceptable in some cases, especially in biological applications where even small changes over time are significant.

In Efficient Encoding and Rendering of Time-Varying Volume Data, Kwan-Liu Ma et al. describe a method for 4D rendering that exploits both time and spatial coherency. Kwan-Liu Ma et al. utilize the quantization of scalar values to reduce the space required to store volumes, octrees to encode spatial coherence, and differencing to exploit time coherence. Their approach is based on two octrees, one containing the volume data, and the other, of similar structure, containing the regions of the 2D image that correspond to sub-trees of the volume octree. Octrees form a family of data structures that represents spatial data using recursive subdivision. These subdivisions form a tree with individual branches comprising sub-trees. At each time point they render only sub-trees that have changed and, by utilizing the image octree, they generate the final image.

In Differential Volume Rendering: A Fast Volume Visualisation Technique for Animation Flow, Han-Wei Shen et al. illustrate the use of differencing in order to detect changes between successive volumes. Han-Wei Shen at al. use ray casting to render the first volume in the series and subsequently update the final image by casting rays only from pixels that correspond to regions of change in the volume.

In Four-dimensional Imaging: the Exploration of Space and Time, Charles F. Thomas et al. describe techniques for the storage and visualisation of 4D optical fluorescence microscopy data. The compression technique uses a conventional scheme such as Joint Photographic Experts Group (JPEG) compression or Moving Pictures Experts Group (MPEG) compression with each 3D data volume of the sequence being de-compressed prior to rendering. Rendering is performed either by using data slicing or a projective technique on the 3D data. There is not described compressing the 4D data in a way that both reduces storage requirements and accelerates rendering.

There exists therefore a need for an improved method of time rendering 4D data that does not exhibit the shortcomings of existing methods. Specifically, there is a need for a method capable of detecting changes in subsequent 3D data sets which exhibits a sufficient sensitivity to actual changes in structure while ignoring changes arising from noise in the data. In addition, there is a need for a method that both compresses the size of the data to be visualised and allows for the expedited processing and rendering of the data in a graphic format readily comprehensible by a human viewer.

BRIEF SUMMARY OF THE INVENTION

It is an object of the present invention to provide a method for compressing 4D image data to accelerate the visualization of the data comprising the sequential steps of processing the 4D image data for storage in an electronic form, and converting the pre-processed 4D image data into a plurality of 2D images, each of the 2D images comprising a 2D display image.

A second embodiment of the present invention is drawn to the aforementioned method wherein the 4D image data is a plurality of 3D images that vary with respect to time.

Yet another embodiment of the present invention is drawn to the aforementioned method wherein the processing step further comprises compressing a first 3D image using run length encoding (RLE), detecting changes between the first 3D image and subsequent successive time varied 3D images, compressing the data of each, subsequent successive time varying 3D image using run-length encoding, and storing the first compressed 3D image and compressed data of each of the subsequent successive time varying 3D image in an electronic format.

Yet another embodiment of the present invention is drawn to the aforementioned method wherein the plurality of 2D images is displayed in graphic form.

Yet another embodiment of the present invention is drawn to the aforementioned method wherein the plurality of 2D images is stored in an electronic format.

Yet another embodiment of the present invention is drawn to the aforementioned method wherein the processing step is performed off-line.

Yet another embodiment of the present invention is drawn to the aforementioned method wherein the converting step occurs interactively.

Still another embodiment of the present invention is drawn to the aforementioned method further comprising the steps of selecting an opacity threshold value, and classifying sub-volumes comprising the plurality of time varying 3D images according to the opacity threshold value.

Still another embodiment of the present invention is drawn to the aforementioned method wherein change detection is accomplished through the application of a chi-squared test applied to successive time varying 3D images.

Still another embodiment of the present invention is drawn to the aforementioned method wherein the chi-squared threshold value is set to .95.

Still another embodiment of the present invention is drawn to the aforementioned method wherein the opacity threshold value is derived from an opacity function.

Yet another embodiment of the present invention is drawn to the aforementioned method wherein the application of a chi-squared test further comprises the steps of dividing each successive time varying 3D image into a plurality of sub-volume voxels, and performing the chi-squared test on corresponding voxels contained in each successive time varying 3D image.

Yet another embodiment of the present invention is drawn to the aforementioned method wherein the run length encoding of the first 3D image further comprises the step of storing only runs of non-transparent voxels.

Yet another embodiment of the present invention is drawn to the aforementioned method wherein the compressing of data using run-length encoding is only performed on the voxels in which change was detected.

Yet another embodiment of the present invention is drawn to the aforementioned method wherein the run length encoded data is stored in two complimentary ways; the first of the two ways containing the run lengths and the second of the two ways containing non-transparent voxel data.

Yet another embodiment of the present invention is drawn to the aforementioned method wherein the compressed first 3D image and the compressed data of each subsequent successive time varying 3D image are stored in three different orientations.

Yet another embodiment of the present invention is drawn to the aforementioned method wherein the three different orientations correspond to orthogonal axes in three dimensional space.

Yet another embodiment of the present invention is drawn to the aforementioned method wherein converting the pre-processed 4D image data further comprises the steps of providing access to the first compressed 3D image to a processor, converting the first compressed 3D image into a modified RLE format, rendering the first compressed 3D image as a plurality of 2D intermediate images, compositing the 2D intermediate images to form a final 2D intermediate image, and warping the final 2D intermediate image to form the 2D display image.

Yet another embodiment of the present invention is drawn to the aforementioned method wherein the rendering of the 2D intermediate image employs a Shear-Warp algorithm.

Yet another embodiment of the present invention is drawn to the aforementioned method wherein the additional step of rendering subsequent 2D display images comprises the steps of loading the run length encoded changes for each successive time varying 3D image, incorporating the encoded changes into the modified RLE format, and rendering the changed regions.

Yet another embodiment of the present invention is drawn to a method for compressing 4D image data to accelerate the visualization of the data comprising the sequential steps of compressing a first 3D image using run length encoding (RLE), detecting changes between the first 3D image and subsequent time varied 3D images by dividing each subsequent time varying 3D image into a plurality of sub-volume voxels and performing a chi-squared test on corresponding voxels contained in each subsequent time varying 3D image and the sub-volume voxels in which was last detected a change, and compressing the data of each, subsequent successive time varying 3D image using run-length encoding.

BRIEF DESCRIPTION OF THE DRAWINGS

FIG. 1 is a pictorial representation of 2D slices of a 3D data volume illustrating structural change in successive volumes.

FIG. 2 is a representation of the data format that comprises RLE data and modified RLE data.

FIG. 3 is a schematic diagram of the process of Shear-Warp rendering.

FIG. 4 is a diagram of the composition and implementation of thick slices.

FIG. 5 is a diagram of the process whereby volume scanlines are updated using a modified RLE scheme.

FIG. 6 is a description of the scanline update algorithm.

FIG. 7 is a diagram showing the identification volumes requiring re-rendering.

FIG. 8 is a depiction of four separate images from a sequence of 3D images.

FIG. 9 is a graphical comparison of rendering times.

FIG. 10 is a graphical comparison of volume pre-processing times.

FIG. 11 is a graphical comparison of volume pre-processing times without change detection.

FIG. 12 is a graphical comparison of stored volume sizes.

FIG. 13 is a graphical comparison of rendering times based upon the number of thick slices.

Like reference numbers and designations in the various drawings indicate like elements.

DETAILED DESCRIPTION

The present invention solves the deficiencies of existing methods through the provision of a method for enabling the visualization of 4D data. The present invention employs the use of a data compression technique capable of accelerating the process of performing the computationally intensive task of accessing large 4D data sets and producing graphical representations therefrom.

The most prominent characteristic of time-varying volume data is a substantial coherence in time. Specifically, a great percentage of volume element values either do not change or change very slowly over time. This property is exploited by the present invention to decrease the computational requirements of time rendering whereby subsequent temporal visualizations of 4D data are created.

The present invention approaches the visualization of 4D data in two stages. An initial stage of pre-processing is performed to transform the 4D data into a representation from which the time sequence of rendered 2D images may be more easily generated. The pre-processing identifies in the second 3D data volume the changes between it and the first data volume. This pre-processing is applied to subsequent 3D data volumes, each time identifying the changes between subsequent volumes and the previous volumes.

An additional advantageous property of the pre-processing is that it is independent of the view direction. The view direction is the vector direction in three-dimensional space from which a user views the 3D data.

The advantages of the present invention's method of pre-processing are two-fold in nature. First, following pre-processing, only the data of the first 3D data volume in the sequence need be stored in its entirety. Subsequent 3D volumes may be represented by this first volume and the sequence of 3D changes necessary to re-create a current 3D volume. This provides data compression, reducing data storage requirements. As illustrated in the example which follows, the storage space required for a subsequent 3D volume corresponding to an original 3D volume comprising approximately 48 Mbytes is approximately two percent of the original 3D volume.

Second, visualization of 2D slices through the data may miss certain features or changes in parts of the 3D image that do not lie on the slice. Traditional projective techniques applied to a sequence of 3D images are slow due to the computationally intensive nature of the calculations to be performed. In the technique of the present invention the process of projective visualization of each 3D data volume in the sequence is computationally simplified as modifications to the 2D image to be rendered take place only where they correspond to changed regions of the 3D data. This results in a reduction in the time to render each 3D data volume into a 2D image.

As mentioned above, the rendering system of the present invention comprises two separate stages, each of which shall be more fully described below. The first stage pre-processes the time varying data, detecting changes, compressing the data by using a run-length encoding (RLE) scheme, and storing the data to disk. The second stage renders the 4D data to a sequence of 2D images to be displayed or stored.

The first stage need not be performed in an interactive fashion, but may instead be performed off-line. As used herein, "off-line" refers to a manner of processing wherein the execution of the processing does not involve active user input. The second stage task of rendering the data is ideally performed in an interactive manner. As used herein, rendering in an interactive manner refers to the process of receiving inputs from a user and rendering visualisations corresponding to the user's input data in so short a time as to appear almost contemporaneous with the user's inputs. Such time intervals are generally sub-second in duration though they may include intervals of a magnitude of several seconds. Therefore, the method of the present invention separates the 4D rendering task into two stages comprising a relatively slow encoding of the data which subsequently enables an efficient rendering phase of the data to the displayed. No additional hardware is required to perform either stage and a useful side effect of the method is the compression of the data stored to disk or other memory device.

As mentioned above, the performance of the rendering stage is improved by exploiting the spatial and temporal coherence in the 4D data. In addition, an opacity function is selected and the volumes are classified according to opacity criteria during the pre-processing stage. This opacity aspect of the method's processing further assists to eliminate a portion of the noise in the data through selection of a sufficiently high opacity threshold value. However, one primary crux of the present invention's methodology is the manner by which changes are detected in subsequent 3D volumes so as to compress the volume data.

As mentioned above and detailed hereafter, the pre-processing stage performs a number of operations the aims of which are to exploit spatial and temporal coherence including the steps of change detection, opacity function selection and classification, and run-length encoding.

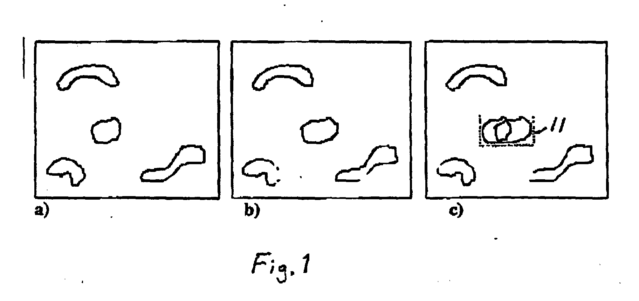

The process of change detection is described with reference to Fig. 1. One method of change detection is simple differencing between voxels in a 3D data volume at time t and the volume at time t+1, followed by a threshold test. The threshold test serves to filter out changes that are spurious, arising from noise in the data which does not represent a true change in the structure of the 3D data volume. Sub-volumes containing changes are then identified as the 3D "bounding box" of any contiguous, or near contiguous (the separation between changed sub-volumes is less than half the radius of the smaller when its volume is considered as a sphere), change. When rendering, one is primarily concerned with the three-dimensional box that bounds the changed volume and less in the precise outline of the changed features themselves. Fig. 1a shows an image at time t, while Fig. 1b illustrates the following image at time t+1. The changed region 11 between the two is identified in Fig. 1c. As illustrated, changed region 11 is rectangular in form. As such, changed region 11 represents the two-dimensional area in which changes to the structure of the volume exist. When the voxels contained in change region 11 and situated within the 2D slice illustrated in Fig. 1 are combined with the change regions of adjacent 2D slices, the volume comprising the bounding box is apparent.

Various change detection techniques can be exploited during pre-processing of the volume data, before storing in an electronic form or format, to eliminate the temporal coherence and transform the data into a form that allows encoding of change and fast rendering. As used herein, "electronic form" refers to any and all modes of storing digital data including, but not limited to, storage on disk drives, optical memory systems, and the like. The present invention employs a sophisticated change detection method that recognises that real data will be subject to corruption by noise, and that there therefore exists a need to distinguish between changes due to the noise and real changes in structure between 3D images. The approach of the present invention involves dividing each data volume up into sub-volumes or blocks. The standard $\chi^2$ criterion is used to determine if the squared difference between two blocks at the same position, but at time t and time t+1, is significant given the noise variance present in the image calculated according to equation 1:

$$\chi^2 = \frac{\sum\limits_{\substack{x,y,z \\ in\,block}} \left( f(x,y,z,t) - f(x,y,z,t+1) \right)^2}{\sigma^2} \tag{1}$$

where x, y, and z represent orthogonal axes, t represents successive data volumes in time, and $\chi$ represents the confidence threshold. A $\chi^2$ value is computed for each block in the 3D image at time t+1. Next a threshold value for $\chi^2$

is chosen so that one can be confident to 95% that the changes in the block over time are due to changing structure rather than due to noise. This threshold value is referred to as the chi-squared threshold value. While the 95% confidence level is commonly adopted in the art for such statistical examinations, any suitable confidence level may be employed that is appropriate to the circumstances of the analysis. Blocks that have been identified as changed are stored to disk together with information about the block location in the 3D data volume.

In one embodiment of the present invention, the noise is assumed to be Gaussian and not to vary as a result of image position. Using these assumptions, the noise variance in the 4D image is computed by subtracting successive blocks at the same position and computing a variance from this block difference according to equation 1. This process of subtraction serves to suppress structure while identifying variance. A histogram of the number of blocks of a particular variance will peak at twice the background noise variance. The factor of two in the variance is due to the differencing of the two volumes. Finding the peak in this way is valid if the 4D image sequence is dominated by blocks that do not contain structural changes. If the images are represented by integers, 1/12 is added to the estimated noise variance to compensate for quantization errors.

In an alternative embodiment of the present invention, it is recognized that data obtained from charge-couple device (CCD) cameras contain a mixture of Poisson and Gaussian noise. State of the art cooled cameras reduce the effect of Gaussian noise, so it is assumed that the main noise contribution comes from the Poisson distribution.

In such a case the voxel density as perceived (sampled) by the CCD cell is Poisson distributed with a mean and variance equal to the real voxel density which is unknown. To form the chi-squared formula the voxel variance is approximated with the sampled voxel density and the variance in the denominator of the chi-squared fraction is replaced with the average of two successive (in time) voxels. Also, since the variance is different for every voxel, the sum over every voxel is expanded. To test the hypothesis, the same thresholds as in the Gaussian noise case are used.

In another embodiment of the present invention, a methodology is employed to address changes which occur in a volume over time but which occur so slowly as to escape detection. Specifically, because the previously described method for detecting changes proceeds by comparing successive blocks at the same position, slight but real changes that occur at a given block or volume over time may appear to be slight in successive blocks and thus escape detection. However, if such slight changes are indicative of small but time persistent changes in the underlying volume, the sum of these small changes over time can be sizeable while escaping detection.

As before, in order to estimate the $\chi^2$ value for the hypothesis testing, differencing of volumes separated in time must be performed. The differencing takes place on a block by block basis to estimate the $\chi^2$ value for each block. Based on the outcome of the hypothesis testing, there is built an estimate of what the current volume is. However, in the present embodiment the difference is computed between the current block and the last unchanged block and not from the previous, in time, block.

This methodology is illustrated by the following pseudo-code:

```
copy(actualblock[1],estimateblock[1]);
      for T=2 to NumberofVolumes
        begin
          if (change(actualblock[T],estimateblock[T-1])==TRUE) copy(actualblock[T],estimateblock[T]);
          else
            copy(estimateblock[T-1],estimateblock[T]);
      end
```

The code consists of two variables that hold the values for the block corresponding to any time T and the block corresponding in time to the last block found to have changed. Accordingly, *actualblock* is the current block under consideration while *estimateblock* is the block in which there was last detected a change. The value in brackets succeeding each variable is the time unit T being considered. Because at first there is no previously changed block, the value of *actualblock* at T=1 is copied into the *estimateblock* variable as indicated by:
copy (actualblock[1],estimateblock[1]); Proceeding from T=2 until T equals the total number of volumes successive volumes are tested for change. Each time T increases, the *actualblock[T]* is tested against the last *estimateblock [T-1]* by applying the function *change* as indicated by:
if (change(actualblock[T], estimateblock[T-1])==TRUE) copy(actualblock[T],estimateblock[T]);
If the value returned by function *change* is TRUE, then a change was detected and *estimateblock* is updated to contain *actualblock[T]*. If no change is detected, the old *estimateblock, estimateblock[T-1]*, is copied into the present *estimateblock, estimateblock[T]* as indicated by:

copy(estimateblock[T-1], estimateblock[T]);

The opacity function task requires the input of a function for determining whether or not a voxel is to be considered opaque. An opacity function is chosen that determines what levels in the image data are to be treated as transparent or opaque. Once a voxel is determined to be opaque, it is treated as blankspace. As used herein, blankspace refers to a voxel which does not contain a value and therefore does not need to be rendered in order to derive the final image. The opacity function is user defined and is conventional in its implementation. Classification of the data volume is a conventional method whereby raw volume data is mapped, based on value, to a range of pseudo-colors for purposes of display.

The last pre-processing step involves the run-length encoding of the data. Typical volume data consist of 70-95% blankspace. Exploiting the presence of blankspace can accelerate volume rendering dramatically. The classic approach to blankspace compression and rendering acceleration, used in conjunction with, for example, the Shear-Warp rendering algorithm, is Run Length Encoding (RLE) of the volume scanlines. Volume scanlines comprise one-dimensional arrays of contiguous voxels.

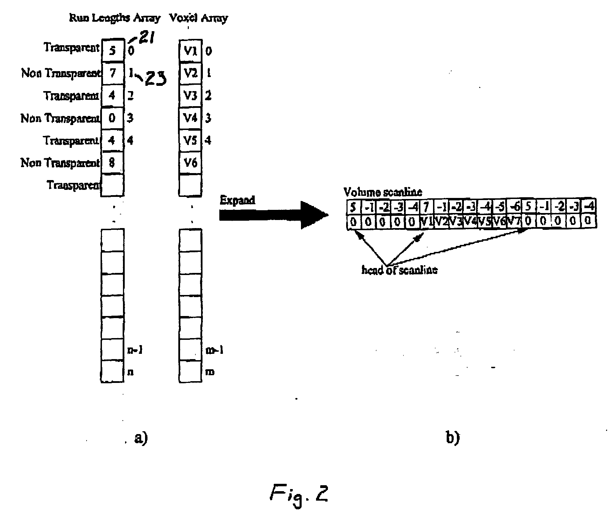

The RLE scheme of the present invention is illustrated in Fig. 2. The RLE scheme is used to store the data as part of the pre-processing phase. The RLE scheme encodes the entire first volume using RLE, storing only runs of non-transparent voxels, and

then encodes only the changed sub-volumes for the second and subsequent volumes, again using RLE. The complete 4D data set can be recovered from the stored RLE. The RLE structure used for storage is illustrated in Fig. 2a. The storage RLE uses two data structures, one to store the run lengths and the other to store the actual non-transparent voxel data. These data structures are 1-D arrays. The run length array stores the lengths of alternate transparent and non-transparent runs of voxels. The data values of the non-transparent voxels are stored in sequence in the second array.

Storage of the subsequent 3D data volumes requires only the storage of small sub-volumes corresponding to the blocks identified as containing changes. These sub-volumes may also contain amounts of blankspace encoded by the RLE.

In its current implementation, the present invention stores three copies of the 4D data. Data is normally stored in x, y, z, t order. The rendering algorithm described below is most efficient when the z direction is the axis "closest" to the viewing direction. Therefore, during the pre-processing phase, the data is transposed about the x, y, and z axes and stored as three distinct copies of the data each of which is ordered to best suit a particular group of viewing directions. As such, each copy represents one of three different orientations. The overhead involved as a result of this transposition and multiple storage of the data is addressed below wherein there is additionally described an extension to the method that reduces this storage overhead.

Rather than recreate the original 4D data from the stored RLE, the present invention generates a modified RLE used by the rendering phase of the algorithm. The modified RLE is shown in Fig. 2b.

The modified run length array expands out the alternate runs of transparent and non-transparent voxels to the original size by inserting runs of zeros for the transparent runs between the runs of non-transparent voxels. In addition, this is augmented by a second piece of information at each location. At the start of a run this information contains the length of the run, whilst elsewhere in a run it stores the distance back to the start of the run.

Once the 4D data has been pre-processed and stored in a RLE form, it must then be rendered to form a sequence of 2D display images. The first step in the process of rendering requires the loading of the initial 3D data volume from disk or other electronic storage media. Subsequent loads of images occur at a faster rate as only the RLE of the changed portions needs to be fetched. To facilitate the rendering algorithm, the present invention retrieves only the version of the data that has its primary axis closest to the viewing direction.

Referring once again to Fig. 2a, there is illustrated the form of the RLE data initially fetched. Each 3D image is stored as a linear array of integers representing the run lengths of transparent and non-transparent voxels, together with a array of linked non-transparent voxel data. Each scanline of an image starts with a transparent entry 21 and ends with a non-transparent entry 23 for purposes of synchronization (even if the runs are of zero length). Runs of transparent and non-transparent voxels alternate. The value stored at each entry in the run-length array is the length of the run of transparent or non-transparent voxels.

The modified RLE storage of the 3D volume, described more fully below, consists of two elements at each x, y, z, position. One element is the data value associated with that voxel, the other is either the length of the run or an offset to the start of that run. The length of the run is stored in the first position of a run of transparent or non-transparent voxels as shown in Fig. 2b. This data structure enables rapid skipping of transparent voxels during rendering, keeps memory accesses in cache order, and allows rapid insertion of changes to the 3D data volume.

The process of expanding from RLE to modified RLE form consumes the non-transparent data array elements according to the specified lengths of runs in the run length array to form a 3D data volume.

The next step in rendering the data image requires rendering the 3D data as 2D intermediate "thick slice" images using the Shear-Warp algorithm. The Shear-Warp algorithm is an efficient technique for rendering 3D data volumes and is briefly outlined as follows.

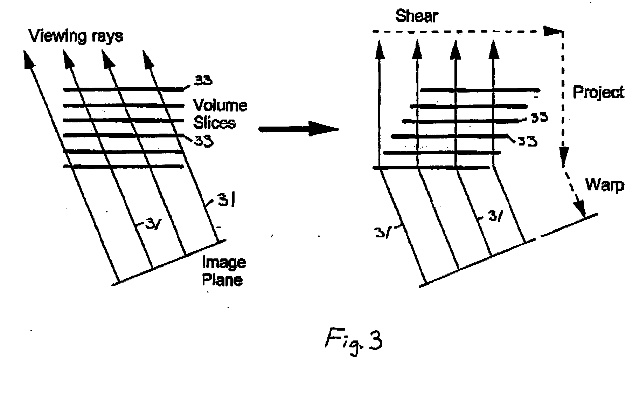

The Shear-Warp factorization method of volume visualization eliminates the arbitrary mapping between object and image space present in ray-tracing algorithms by making all rays 31 pass through volume slices 33 parallel to a co-ordinate axis (vertical) as illustrated in Fig. 3. This is achieved by converting the viewing transformation into a 3D shear, projecting from 3D to 2D, and performing a 2D warp to correct for geometric distortion.

In the shear operation, each slice of the volume is translated by a shearing coefficient, re-sampled and composed from 3D to 2D to form an intermediate image. Once this is done for all the slices in the volume, a 2D warp of the intermediate image must take place in order to generate the final image.

The present invention extends the utility of the Shear-Warp rendering technique for 4D data visualization through the addition of a plurality of modifications. The first of these modifications to the Shear-Warp concerns the compositing stage. This stage of the Shear-Warp accumulates intensity and opacity through the volume. Opacity may be derived from the opacity transfer function derived at an earlier stage and described above.

In the original scheme (Lecroute & Levoy (1994)) the intensity of a pixel in the 2D intermediate image is computed by equation 2:

$$L(x) = \sum_{j=0}^{n-1} c_i \prod_{j=0}^{i-1} (1 - a_j) \qquad (2)$$

$$= c_0 + c_1(1 - a_0) + c_2(1 - a_0)(1 - a_1) + L + c_{n-1}(1 - a_0)L\,(1 - a_{n-2})$$

$$= c_0 \ over \ c_1 \ over \ c_2 \ ... \ over \ c_{n\text{-}1}$$

$$(where = is \ \text{``equals by definition''}).$$

where $a_i = 1 - \exp[-\phi_i \Delta x]$ is the opacity of sample i, $C_i = (\varepsilon_i/a_i)\Delta x$ the color of sample i, and $c_i = a_i C_i$ is the pre-multiplied color and opacity.

By introducing the "over" operator the volume rendering equation is as follows in equation 3:

$$L(x) = c_0 \ over \ c_1 \ over \ c_2 \ L \ over \ c_{n\text{-}1} \qquad (3)$$

This rendering equation has an important property referred to as partial ray compositing. Partial ray compositing refers to the ability to divide a ray into two or more parts at any point on the ray and to treat the resulting rays as completely different rays. After each of these sub-rays is composited, one need only to combine them by using the over operator to arrive at a final pixel color or intensity. The present invention exploits this partial ray compositing by dividing the data volume into a number of thick slices. These thick slices are each a division of the volume, in the primary axis direction, divided into a number of contiguous slices. Using the partial ray compositing idea, the ray is split into a number of rays each of which composites voxels belonging to a thick slice. Each thick slice typically consists of 4 to 24 slices of the 3D data, and, for convenience, corresponds in width to the distance in the primary direction of the width of the blocks used for change detection.

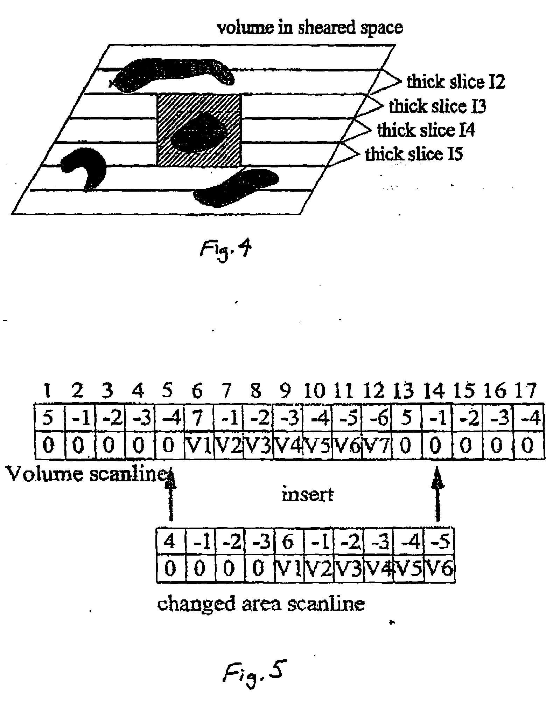

Each thick slice has associated with it a partial intermediate image that has been composited from the data in the thick slice as illustrated in Fig. 4. The thick slice intermediate images are initially created from the first 3D data volume. Once each intermediate image is produced, one for each thick slice, then stored in a data structure. When the compositing is completed within each thick slice, the partial intermediate images are composited using the over operator to produce the final 2D intermediate image as defined by equation 4.

$$I = I_1 \ over \ I_2 \ over \ I_3 \ over \ I_4 \ over \ I_5 \ over \ I_6 \ over \ I_7 \qquad (4)$$

Using thick slices to render the whole volume does not make the rendering application any faster at this stage. In fact, the extra compositing of thick slices tends to add additional overhead to the method, which is dependent on the number of thick slices.

However, the efficiency of the method will become apparent when rendering subsequent 3D data volumes from the 4D sequence.

Having thusly created the final intermediate 2D image, the 2D image must be warped to produce the image for display. Such warping is performed consistent with the conventional method of the Shear-Warp decomposition of the viewing transformation.

Having therefore rendered the first 3D image as a final rendered 2d image, subsequent 2D images must be computed and displayed. This process of displaying subsequent images proceeds as follows. The changes that were detected in the pre-processing phase are stored in RLE form. The changes were detected using a block structure (typically 16 by 16 by 16 voxels although other grid sizes may be used), and any blocks detected as having changed are converted to RLE and stored. Three copies of each changed sub-volume were stored, one for each possible primary viewing direction. The appropriate copy of the data is chosen for the next stage in which RLE changed data is incorporated into the modified RLE 3D volume. In this step of the algorithm, only the changed region of the next image need be loaded and integrated into the complete modified RLE data held in the main memory of the computer upon which the calculations are being performed.

The stored RLE for the changed blocks may represent one or more sub-volumes where changes took place. Each block in RLE form has associated with it information that describes where it is to be inserted into the modified RLE complete volume.

The rational behind the modified RLE is that the RLE data structure performs well in the case of rendering a single 3D volume, but its use becomes increasingly difficult with a sequence of 3D volumes. The RLE structure is a 1-D array into which must be inserted the changes. A conventional RLE representation of the data would require moving large amounts of data around to accommodate the inserted data and would comprise resource intensive operation.

Other data structures could be used that support updating more easily, such as a linked list. The linked list structure, however, suffers from several drawbacks. First, there is substantial memory overhead to store the pointers, and second, the volume data will not in general be stored in successive memory locations thus breaking the memory and cache coherence. Because of the high speed of modern processors, there is a growing mismatch between the relatively high speed of internal processor memory operations and the relatively low external memory speeds (a factor of ~5:1 in 1999).

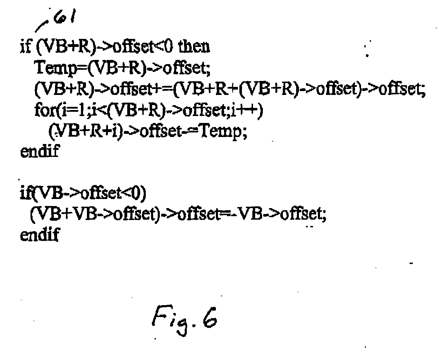

The modified RLE data structure is easy to update and maintains memory coherence. The algorithm for inserting runs of voxels into the modified RLE is detailed in Fig. 6 and described more fully below. The advantage of this data structure is its efficiency when it comes to updating. Imagine the following situation where a change area scanline needs to be inserted into some position in the volume scanline as illustrated in Fig. 5. All that is desired when inserting a new portion of the scanline is to check (and probably amend) the following and the previous runs and then copy the new portion to the scanline. The algorithm for updating a scanline is illustrated in Fig. 6 where R is the scanline length, VB a pointer indicating the position in the volume scanline to insert the new chunk, and *offset* is the number of voxels to leap.

The first if-statement 61 in the scanline update algorithm asserts that the offset of the voxel following the last voxel of the portion of the scanline (voxel number 15 in Fig. 5) to be updated is not less than zero. If it greater that zero, no updating of the following run-length is necessary, because the voxel under consideration is at the head of a run. If, on the other hand, the offset is indeed less that zero, it means that the new portion of the scanline overlaps the following run-length and updating is necessary. This is easily done by following the offset to find the head of the run deducting thus the number of voxels in the run and making the voxel under consideration (number 15 in this example) the head voxel. In addition, updating the rest of the run's voxels is needed in order to point to the new head of the run.

The second if-statement asserts that the offset of the first voxel to be updated (voxel number 5 in Fig. 5) is not less than zero. If it is greater than zero, no action should be made because the head of the new portion coincides with the head of the run. If it is less that zero, all that is required is to follow the offset to the head of the run and reduce the number of voxels belonging to this run by *-offset.* The algorithm may be extended to merge adjacent runs of the same type. Finally, copying of the new voxels to the corresponding positions concludes the task of scanline updating.

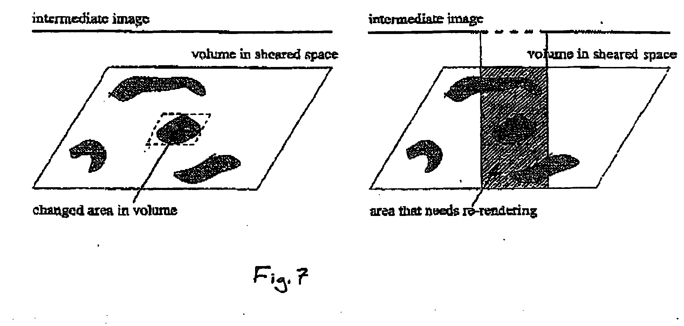

The next step requires the rendering of changed (x, y) regions of thick slices of 3D volume using Shear-Warp. The use of thick slices is introduced herein to avoid the situation illustrated in Fig. 7b wherein is illustrated the amount of data to be re-rendered had the thick slice approach not been employed.

As can be seen, the portion of the 3D volume that changes will affect a number of thick slices. If the intermediate image intensity was formulated by compositing the intermediate images generated by each thick slice, according to equation 4, only a limited number of thick slices will be affected by the change. In the example shown earlier with reference to Fig. 5, only thick slices $I_3$, $I_4$, and $I_5$ are affected by the changing object. Consequently, one need recalculate only those three partial intermediate images. Next, the changed thick slice intermediate images and the unchanged thick slice intermediate images may be combined using the over operator, described earlier, with respect to equation 4, to derive the final intermediate image intensity.

Lastly, the final intermediate image is warped as before to produce the 2D image for display. It is not necessary to re-warp the entire final image, only that portion that has changed with the addition of a border of a few pixels extending beyond. The warp operation is computationally expensive, so avoiding a re-warp of the entire image provides further computational savings. The examples that follow further illustrate the invention:

Examples:

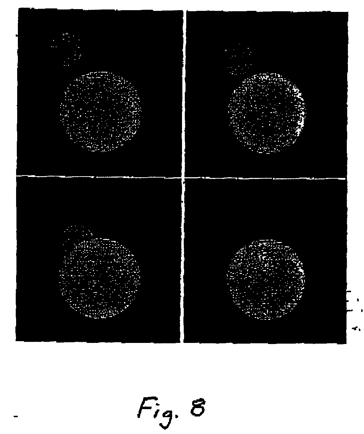

For the purpose of evaluating the methods described herein, a test was performed upon a synthetic volume of $257^3$ voxels, 8 bits per voxel, that contained 2 hollow spheres, one with radius 65 and thickness 10 voxels and another with radius and thickness of 25 and 5 voxels respectively. To simulate motion, the smaller of the two spheres is moving towards the larger one, one voxel distance per time sample. 20 such volumes were processed. The application was tested on a Sun Microsystems Ultra10/300Mhz (Sun Microsystems of Palo Alto, California) with 320 MB of RAM. The viewpoint was set to 45 degrees from the z axis. Fig. 8 depicts four separate rendered images from a sequence of 3D images.

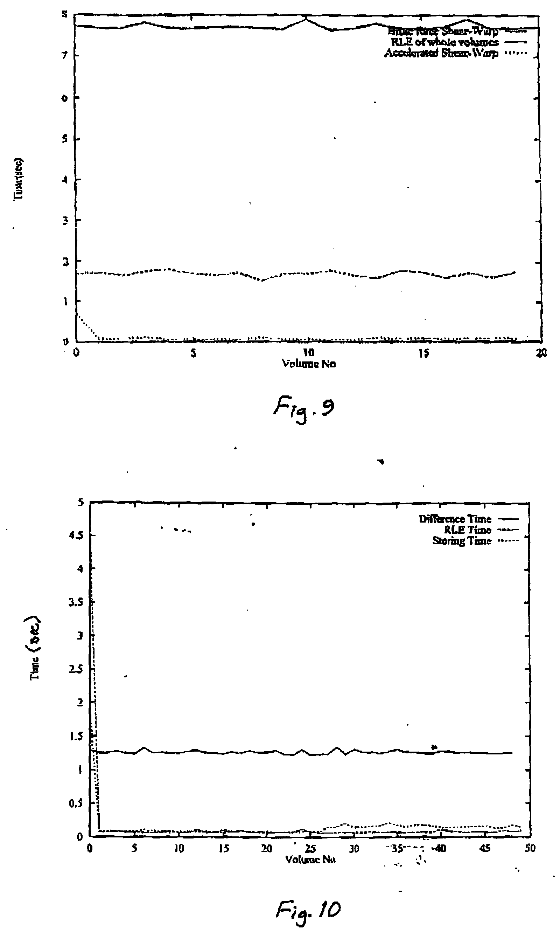

Fig. 9 illustrates the execution times corresponding to brute force rendering, run length encoding of the data, and rendering utilizing the present invention's methods for exploiting temporal and spatial coherence.

In the first instance, every voxel in the volume is rendered by using the brute-force version of the Shear-Warp factorization, without considering the spatial and temporal coherence. It is clear that this method is unacceptably slow for interactive applications. Furthermore, the space required to save the whole volume to disk is about 48MB ($257^3$, at 3 bytes per voxel), which makes the storage of many volumes prohibitive. In the second case we use the RLE to compress the volumes, and store the volumes to disk. Using the RLE eliminates spatial coherence but not temporal coherence. The result is that the rendering becomes faster, but still not fast enough for real-time rendering. In the final case, we detect the changes in the volume by using simple differencing and compress only the changed area using the RLE. This eliminates both spatial and temporal coherence and as a result the rendering part is accelerated significantly.

Fig. 10 presents the times required in the pre-processing stage of the rendering system, that is, the stage that detects change, run-length encodes and stores the volumes. We observe that the run-length encoding takes a significant amount of time only when rendering the first volume. That is because the first volume is saved as a whole. In the next steps, the change between successive volumes is detected, encoded, and, saved which takes comparatively much less time. The change detection method used in the present application is differencing which works well in this case where noise does not corrupt the data. Change detection by simple differencing takes about 1.2 seconds per volume.

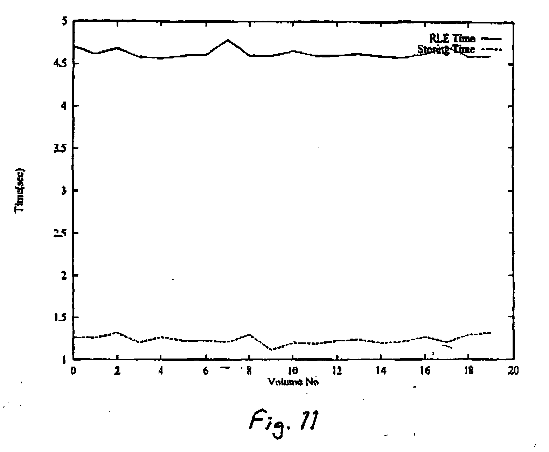

For comparison, Fig. 11 presents the times required in the pre-processing stage of the rendering system, when the original RLE compression is used on all volumes, without change detection. It becomes apparent that the execution time in this case is significantly larger.

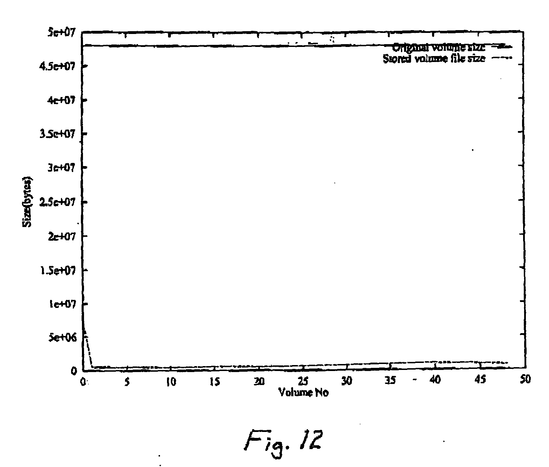

Fig. 12 compares the size occupied by the original volume to the size occupied by the compressed volume after change detection. With change detection and compression, the volume data occupy significantly less disk space.

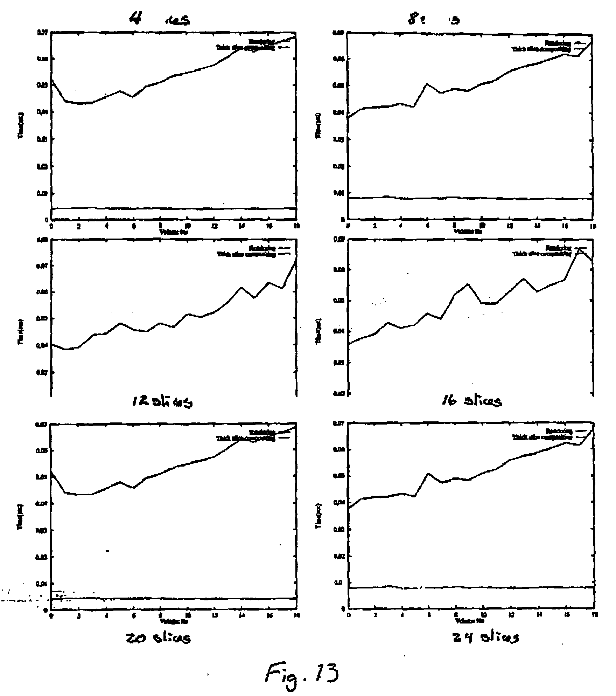

Fig. 13 demonstrates the effect that the number of thick slices has on the rendering speed. We conducted this experiment using 4, 8, 12, 16, 20 and 24 thick slices. By reducing the size of the thick slice (that is introducing more thick slices to the volume) we can reduce the rendering overhead, but on the other hand we increase the time required to re-composite the partial intermediate images. This is apparent in Fig. 13. The upper line shows the rendering time and the lower the re-compositing time.

The central idea of this invention is the use of a data compression technique that facilitates the rapid visualisation of 4D data. In optical fluorescence microscopy the 4D data would be a sequence of 3D data volumes. The present invention exploits the spatial coherence and the temporal coherence of the data in such a way that the storage requirements and computational cost of visualisation are reduced. The invention implicitly covers any technique that uses a representation of 4D data (or five-dimensional (5D) data as detailed below), derived from optical fluorescence microscopy including transform domain methods such as Discrete Cosine, Fourier, Fourier-Mellin, Wavelet, or other data structures such as, but not limited to, quadtrees, octrees, and hexadecimal-trees that reduce data storage and accelerate subsequent rendering, by any projective visualisation technique, to a sequence of 2D images.

Multi-channel data where several "colors" may be observed under an optical fluorescence microscope can be treated in a similar way. The invention implicitly covers such a technique as the data may be stored as RGB (red, green, blue), or similar color representation, or as a number of channels of data collected at different wavelengths. Data may also then be referred to as 5D. The representation of the fifth dimension may be explicit as in RGB, or may be subsumed into the classification stage described earlier.

One useful extension to the technique would be to modify the storage of data. Currently there is stored three copies of the 3D data volumes that form the sequence of volumes in the 4D data. Each of the three versions assumes a different primary viewing direction. There is stored three copies of the first 3D data set and three copies of the subsequent 3D sub-volumes that contain the changes. It is possible to save storage space by only storing one copy of either the first entire 3D data volume, or one copy of the 3D changed sub-volumes, or one copy of both. There will be, however, a computational cost associated with these combinations. Storing one copy of the first volume will require a transposition of the data to bring the primary axis near to the viewing direction in about 60% of cases, this will add a slight delay to the display of the initial image. Storing one copy of the changed sub-volumes will require a delay as the image sequence is being generated for each image - this delay will be smaller than that for the first image as the quantities of data are likely to be less. Storing one copy of the first and changed sub-volumes will introduce an overhead at the start of playback and for each generated image. If these delays are acceptable the data storage can be reduced by a factor of three.

One or more embodiments of the present invention have been described. Nevertheless, it will be understood that various modifications may be made without departing from the spirit and scope of the invention. Accordingly, other embodiments are within the scope of the following claims.

**Claims**

1. A method for compressing 4D image data to accelerate the visualization of said data comprising the sequential steps of:

    a. processing the 4D image data for storage in an electronic form; and
    b. converting the pre-processed 4D image data into a plurality of 2D images, each of said 2D images comprising a 2D display image.

2. The method of claim 1 wherein the 4D image data is a plurality of 3D images that vary with respect to time.

3. The method of claim 2 wherein the processing step further comprises:

    a. compressing a first 3D image using run length encoding (RLE);
    b. detecting changes between said first 3D image and subsequent successive time varied 3D images;
    c. compressing the data of each, subsequent successive time varying 3D image using run-length encoding; and
    d. storing the first compressed 3D image and compressed data of each of said subsequent successive time varying 3D image in an electronic format.

4. The method of claim 3 wherein the plurality of 2D images is displayed in graphic form.

5. The method of claim 3 wherein the plurality of 2D images is stored in an electronic format.

6. The method of claim 3 wherein said processing step is performed off-line.

7. The method of claim 3 wherein the converting step occurs interactively.

8. The method of claim 3 further comprising the steps of:

    a. selecting an opacity threshold value; and
    b. classifying sub-volumes comprising the plurality of time varying 3D images according to the opacity threshold value.

9. The method of claim 8 wherein change detection is accomplished through the application of a chi-squared test applied to successive time varying 3D images.

10. The method of claim 9 wherein the chi-squared threshold value is set to .95.

11. The method of claim 10 wherein the opacity threshold value is derived from an opacity function.

12. The method of claim 9 wherein the application of a chi-squared test further comprises the steps of:

    a. Dividing each successive time varying 3D image into a plurality of sub-volume voxels; and
    b. Performing the chi-squared test on corresponding voxels contained in each successive time varying 3D image.

13. The method of claim 12 wherein the run length encoding of the first 3D image further comprises the step of storing only runs of non-transparent voxels.

**14.** The method of claim 13 wherein the compressing of data using run-length encoding is only performed on the voxels in which change was detected.

**15.** The method of claim 13 wherein the run length encoded data is stored in two complimentary ways; the first of said two ways containing the run lengths and the second of said two ways containing non-transparent voxel data.

**16.** The method of claim 13 wherein the compressed first 3D image and the compressed data of each subsequent successive time varying 3D image are stored in three different orientations.

**17.** The method of claim 16 wherein the three different orientations correspond to orthogonal axes in three dimensional space.

**18.** The method of claim 13 wherein converting the pre-processed 4D image data further comprises the steps of:

  a. providing access to the first compressed 3D image to a processor;
  b. converting the first compressed 3D image into a modified RLE format;
  c. rendering the first compressed 3D image as a plurality of 2D intermediate images;
  d. compositing the 2D intermediate images to form a final 2D intermediate image; and
  e. warping the final 2D intermediate image to form the 2D display image.

**19.** The method of claim 18 wherein the rendering of the 2D intermediate image employs a Shear-Warp algorithm.

**20.** The method of claim 18 wherein the additional step of rendering subsequent 2D display images comprises the steps of:

  a. loading the run length encoded changes for each successive time varying 3D image;
  b. incorporating the encoded changes into the modified RLE format; and
  c. rendering the changed regions.

**21.** A method for compressing 4D image data to accelerate the visualization of said data comprising the sequential steps of:

  b. compressing a first 3D image using run length encoding (RLE);
  c. detecting changes between said first 3D image and subsequent time varied 3D images by dividing each subsequent time varying 3D image into a plurality of sub-volume voxels and performing a chi-squared test on corresponding said voxels contained in each subsequent time varying 3D image and said sub-volume voxels in which was last detected a change; and
  d. compressing the data of each, subsequent successive time varying 3D image using run-length encoding.

**22.** The method of claim 21 wherein the chi-squared threshold value is set to .95.

**23.** The method of claim 22 wherein the compressing of data using run-length encoding is only performed on the voxels in which change was detected.

a)　　　b)　　　c)

Fig. 1

Run Lengths Array    Voxel Array

| Transparent | 5 | 0 | 21 |
| Non Transparent | 7 | 1 | 23 |
| Transparent | 4 | 2 | |
| Non Transparent | 0 | 3 | |
| Transparent | 4 | 4 | |
| Non Transparent | 8 | | |
| Transparent | | | |

| V1 | 0 |
| V2 | 1 |
| V3 | 2 |
| V4 | 3 |
| V5 | 4 |
| V6 | |

n-1
n

m-1
m

Expand

Volume scanline

| 5 | -1 | -2 | -3 | -4 | 7 | -1 | -2 | -3 | -4 | -5 | -6 | 5 | -1 | -2 | -3 | -4 |
| 0 | 0 | 0 | 0 | 0 | V1 | V2 | V3 | V4 | V5 | V6 | V7 | 0 | 0 | 0 | 0 | 0 |

head of scanline

a)

b)

Fig. 2

Fig. 3

volume in sheared space

> thick slice I2
> thick slice I3
> thick slice I4
> thick slice I5

Fig. 4

| 1 | 2 | 3 | 4 | 5 | 6 | 7 | 8 | 9 | 10 | 11 | 12 | 13 | 14 | 15 | 16 | 17 |
|---|----|----|----|----|----|----|----|----|----|----|----|----|----|----|----|----|
| 5 | -1 | -2 | -3 | -4 | 7 | -1 | -2 | -3 | -4 | -5 | -6 | 5 | -1 | -2 | -3 | -4 |
| 0 | 0 | 0 | 0 | 0 | V1 | V2 | V3 | V4 | V5 | V6 | V7 | 0 | 0 | 0 | 0 | 0 |

Volume scanline

insert

| 4 | -1 | -2 | -3 | 6 | -1 | -2 | -3 | -4 | -5 |
|---|----|----|----|---|----|----|----|----|----|
| 0 | 0 | 0 | 0 | V1 | V2 | V3 | V4 | V5 | V6 |

changed area scanline

Fig. 5

```
                ,61
if (VB+R)->offset<0 then
   Temp=(VB+R)->offset;
   (VB+R)->offset+=(VB+R+(VB+R)->offset)->offset;
   for(i=1;i<(VB+R)->offset;i++)
      (VB+R+i)->offset-=Temp;
endif

if(VB->offset<0)
   (VB+VB->offset)->offset=-VB->offset;
endif
```

Fig. 6

intermediate image

volume in sheared space

changed area in volume

intermediate image

volume in sheared space

area that needs re-rendering

Fig. 7

Fig. 8

Fig. 9

Fig. 10

Fig. 11

Fig. 12

Fig. 13